Europäisches Patentamt

European Patent Office

Office européen des brevets

(19)

(11) Numéro de publication : **0 286 468 B1**

(12)

# FASCICULE DE BREVET EUROPEEN

(45) Date de publication du fascicule du brevet :
**11.12.91 Bulletin 91/50**

(51) Int. Cl.⁵ : **A22C 25/16**

(21) Numéro de dépôt : **88400575.2**

(22) Date de dépôt : **11.03.88**

(54) **Procédé et machine pour la séparation de chair à partir des chutes de filetage de poissons.**

(30) Priorité : **13.03.87 FR 8703464**

(43) Date de publication de la demande :
**12.10.88 Bulletin 88/41**

(45) Mention de la délivrance du brevet :
**11.12.91 Bulletin 91/50**

(84) Etats contractants désignés :
**DE GB**

(56) Documents cités :
**DE-A- 2 553 586**
**FR-A- 2 166 274**

(73) Titulaire : **INSTITUT FRANCAIS DE RECHERCHE POUR L'EXPLOITATION DE LA MER (IFREMER)**
**66 avenue d'Iéna**
**F-75116 Paris (FR)**

(72) Inventeur : **Han-Ching, Luçay**
**13 Avenue des Pétrels**
**F-44000 Nantes (FR)**
Inventeur : **Mastail, Max**
**La Herpinière**
**F-44390 Les Touches (FR)**
Inventeur : **Lachambre, Yves**
**25 Avenue du Lac**
**F-44110 Chateaubriant (FR)**

(74) Mandataire : **Dawidowicz, Armand Cabinet Dawidowicz**
**18, Boulevard Pereire**
**F-75017 Paris (FR)**

EP 0 286 468 B1

Jouve, 18, rue Saint-Denis, 75001 PARIS

## Description

La présente invention concerne la récupération des chairs comestibles qui restent attachées à la colonne vertébrale ou grande arête des poissons après le prélèvement des filets au cours de l'opération dite de filetage. Il est connu que ces chairs qui peuvent être utilisées pour la préparation de pulpe ou de boulettes de poisson, après élimination des arêtes et nageoires dorsales et ventrales, se situent dans les chutes de filetage dans le plan vertical au-dessus et au-dessous de la colonne vertébrale. La pratique antérieure de récupération de ces parties consistait à les découper manuellement au couteau sur une planche à découper en suivant la colonne vertébrale après avoir éliminé la poche à sang ventrale et les nageoires.

Lorsque l'on a cherché à mécaniser l'opération, comme proposé par exemple dans FR-A-2.166.274, on a monté en aval de la machine de filetage et faisant corps avec celle-ci deux paires de guides constitués par deux paires de plaques fixées parallèles superposées verticalement et disposées dans chaque paire respectivement de part et d'autre des arêtes dorsales et des arêtes ventrales pour maintenir le déchet de filetage dans la position verticale dans laquelle il quitte la machine de filetage avec entre les deux paires, de plaques supérieure et inférieure, un espace dans lequel circule la colonne vertébrale qui est entraînée par des dents d'un berceau d'entraînement. On découpe alors mécaniquement ou manuellement les zones des arêtes dorsales et ventrales au-dessus et au-dessous de la colonne vertébrale.

Dans la pratique, cette machine qui est basée essentiellement sur l'idée de procéder à l'opération de découpage antérieurement connue sous forme manuelle, sur des chutes de filetage maintenues dans la position dans laquelle elles sortent du filetage par deux paires de guides verticaux disposés de part et d'autre des lames de chair restant sur la colonne vertébrale, en les faisant progresser entre ces guides en exerçant une traction sur la colonne vertébrale, présente un certain nombre d'inconvénients. En effet les lames de chair enrobant les arêtes dorsales et ventrales frottent sur les surfaces des plaques-guides avec un coefficient de frottement élevé en raison de leur nature poisseuse ; des fragments de chair s'en détachent et collent sur les plaques-guides et on aboutit rapidement à un bourrage.

On connaît, par DE-A-2.553.586 qui montre les caractéristiques des préambules des revendications 1 et 4, un procédé et une machine pour récupérer les lames de chair situées, dans les chutes de filetage des poissons, de part et d'autre de la colonne vertébrale, par découpes effectuées au-dessus et au-dessous de la colonne vertébrale, les lames de chair étant soutenues, sur au moins une de leurs deux faces, par la surface d'un élément transporteur. Ce procédé et cette machine connus ne permettent pas un bon maintien des chutes de filetage au cours de l'opération de coupe, de sorte que des lames de chair peuvent rester sur l'arête et que l'arête elle-même peut venir interférer avec les organes de coupe.

La présente invention a pour but de remédier à ces inconvénients et elle a pour objet un procédé pour récupérer les lames de chair situées, dans les chutes de filetage des poissons, de part et d'autre de la colonne vertébrale par découpes effectuées au-dessus et au-dessous de la colonne vertébrale par des organes de coupe, les lames de chair étant soutenues, sur au moins une de leurs deux faces, par la surface d'un élément transporteur, caractérisé en ce que ledit élément transporteur est animé d'une vitesse égale à la vitesse d'entraînement de la colonne vertébrale, la course de l'élément transporteur se situant au moins de part et d'autre du point d'action des organes de coupe.

Selon un mode de réalisation préférentiel du procédé les chutes de filetage sont transportées à plat sur deux bandes transporteuses disposées de part et d'autre de la colonne vertébrale et des plans de coupe des organes de coupe.

Selon une autre caractéristique du procédé, la colonne vertébrale étant entraînée par une chaîne à picots circulant entre les bords centraux des bandes transporteuses, la chute de filetage est maintenue en appui, au-dessus de la chaîne à picots et de la partie centrale des bandes transporteuses, par un organe de pression mis en appui élastiquement et se prolongeant entre les organes de coupe.

Selon l'invention, la machine pour la mise en oeuvre du procédé, du type comportant deux bandes transporteuses parallèles et des organes de coupe pour récupérer les lames de chair situées, dans les chutes de filetage des poissons, de part et d'autre de la colonne vertébrale par des découpes effectuées au-dessus et au-dessous de la colonne vertébrale, est caractérisée en ce que les bords centraux desdites bandes transporteuses passent à proximité des deux organes de coupe, et elle comporte un bac d'alimentation situé à l'extrémité amont des bandes transporteuses, un rouleau parallèle aux cylindres de renvoi des bandes transporteuses sensiblement à l'aplomb de l'extrémité du bac d'alimentation pour appuyer les chutes engagées manuellement à plat depuis ledit bac, sur les bandes transporteuses et une plaque d'appui fixe recouvrant l'intervalle entre les deux bandes transporteuses et dépassant les bords centraux desdites bandes transporteuses, en amont des organes de coupe, et se prolongeant entre lesdits organes de coupe, des moyens étant prévus pour mettre en appui élastique sur la chute de filetage.

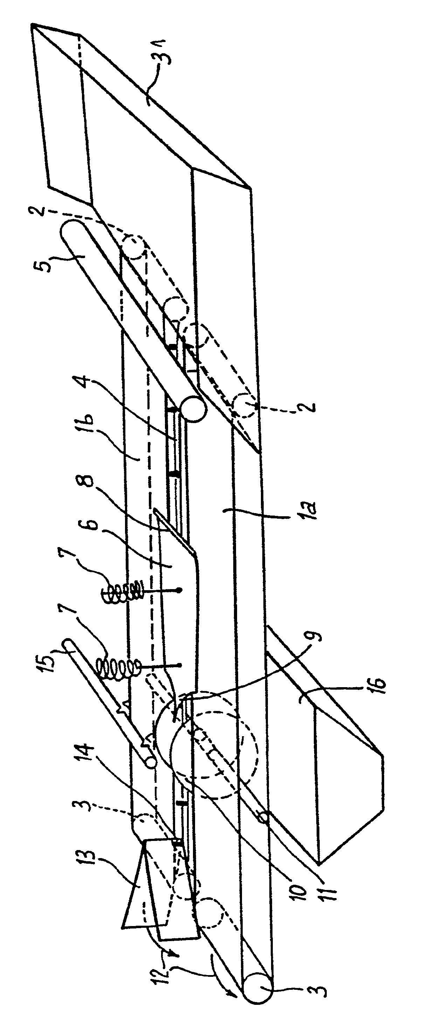

D'autres caractéristiques de la machine conforme à l'invention apparaîtront à la lecture de la description d'un mode de réalisation faite ci-après avec référence au dessin schématique ci-annexé qui en est une vue en perspective.

Dans le dessin, les références 1a et 1b désignent les bandes transporteuses tendues entre des cylindres amont 2 et des cylindres aval 3, au moins un axe de ces cylindres étant entraîné en rotation depuis un moteur non représenté.

La référence 31 désigne le bac dans lequel sont placées les chutes de filetage à traiter, ce bac étant incliné en direction des bandes transporteuses. La référence 4 désigne la chaîne à picots qui circule entre les deux bandes transporteuses 1a, 1b et qui est entraînée à la même vitesse que celle-ci, 5 désigne un cylindre presseur qui se trouve sensiblement à l'aplomb du bord du bac 3. Les chutes de filetage sont engagées entre le cylindre 5 et les bandes transporteuses 1a, 1b avec la colonne vertébrale du poisson engagée sur les picots de la chaîne 4. La référence 6 désigne une plaque qui recouvre l'intervalle entre les bandes transporteuses 1a, 1b et s'étend au-dessus de la partie de bordure desdites bandes. La plaque 6 est sollicitée élastiquement vers les bandes transporteuses 1 et les picots de la chaîne 4 par des ressorts 7. Le bord avant 8 de la plaque est relevé pour faciliter l'engagement des chutes de filetage sous ladite plaque et sa partie arrière 9 est réduite en largeur pour s'engager entre les deux disques de découpe 10 montés sur un arbre d'entraînement commun 11. Les deux disques de découpe sont situés dans deux plans parallèles et espacés d'une distance inférieure à l'écartement entre les bandes transporteuses 1. L'arbre 11 est entraîné à partir du moteur commun, non représenté, de la machine par une transmission d'un type quelconque connu. Les parties contenant les arêtes dorsales ou ventrales et la chair sont séparées de la colonne vertébrale par les disques 10 et entraînées vers l'aval par les bandes transporteuses 1 et elles tombent à l'extrémité des bandes 1, en 12, dans des bacs de réception non représentés, en étant écartées par un déflecteur 13. La pointe du déflecteur 13 qui comporte une fenêtre 14 pour le passage des picots de la chaîne 4 arrache la colonne vertébrale des picots et l'éjecte entre les bandes transporteuses. Une rampe d'arrosage 15 arrose en permanence les disques 10, les bandes transporteuses 1 et la chaîne 4 pour éviter le collage des chairs. Les colonnes vertébrales sont récupérées dans un bac 16.

Les morceaux contenant la chair et les arêtes dorsales et ventrales qui sont ainsi récupérées en 12, sont ensuite traités dans une machine pour séparer la chair des arêtes et des nageoires et la pulpe de chair est alors traitée de toute manière connue.

## Revendications

1. Un procédé pour récupérer les lames de chair situées, dans les chutes de filetage des poissons, de part et d'autre de la colonne vertébrale par découpes effectuées au-dessus et au-dessous de la colonne vertébrale par des organes de coupe, les lames de chair étant soutenues, sur au moins une de leurs deux faces, par la surface d'un élément transporteur, caractérisé en ce que ledit élément transporteur est animé d'une vitesse égale à la vitesse d'entraînement de la colonne vertébrale, la course de l'élément transporteur se situant au moins de part et d'autre du point d'action des organes de coupe.

2. Un procédé selon la revendication 1, caractérisé en ce que les chutes de filetage sont transportées à plat sur deux bandes transporteuses (1a, 1b) disposées de part et d'autre de la colonne vertébrale et des plans de coupe des organes de coupe (10).

3. Un procédé selon la revendication 2, caractérisé en ce que la colonne vertébrale étant entraînée par une chaîne à picots (4) circulant entre les bords centraux des bandes transporteuses, la chute de filetage est maintenue en appui, au-dessus de la chaîne à picots (4) et de la partie centrale des bandes transporteuses (1), par un organe de pression (6) mis en appui élastiquement et se prolongeant entre les organes de coupe (10).

4. Une machine pour la mise en oeuvre du procédé selon l'une quelconque des revendications 1 à 3, du type comportant deux bandes transporteuses parallèles et des organes de coupe pour récupérer les lames de chair situées, dans les chutes de filetage des poissons, de part et d'autre de la colonne vertébrale par des découpes effectuées au-dessus et au-dessous de la colonne vertébrale, caractérisée en ce que les bords centraux desdites bandes transporteuses (1a, 1b) passent à proximité des deux organes de coupe (10), et la machine comporte un bac d'alimentation (3) situé à l'extrémité amont des bandes transporteuses, un rouleau (5) parallèle aux cylindres de renvoi (2) des bandes transporteuses sensiblement à l'aplomb de l'extrémité du bac d'alimentation (3) pour appuyer les chutes engagées manuellement à plat depuis ledit bac sur les bandes transporteuses et une plaque d'appui fixe (6) recouvrant l'intervalle entre les deux bandes transporteuses et dépassant les bords centraux desdites bandes transporteuses, en amont des organes de coupe (10), et se prolongeant entre lesdits organes de coupe (en 9), des moyens (7) étant prévus pour mettre ladite plaque en appui élastique sur la chute de filetage.

## Claims

1. A method for recovering the flesh layers situated, in the fish filleting chutes, on either side of the backbone by cuts effected above and below the backbone by cutting members, the flesh layers being supported, on at least one of their two faces, by the surface of a transporting element, characterized in that said transporting element is moving at a speed which is equal to the entrainment speed of the backbone, the stroke of the transporting element being situated at least on either side of the point of action of the cutting members.

2. A method according to claim 1, characterized in that the filleting chutes are transported flatwise on two conveyor belts (1a, 1b) placed on either side of the backbone and of the cutting planes of the cutting members (10).

3. A method according to claim 2, characterized in that the backbone being driven by a pin chain (4) running between the central edges of the conveyor belts, the filleting chute is held bearing, above the pin chain (4) and the central portion of the conveyor belts (1), by a pressure member (6) brought resiliently in a bearing position and extending between the cutting members (10).

4. A machine used for practicing the method according to any one of claims 1 to 3, of the type including two parallel conveyor belts and cutting members for recovering the flesh layers situated in the fish filleting chutes, on either side of the backbone by cuts effected above and below the backbone, characterized in that the central edges of said conveyor belts (1a, 1b) run in the vicinity of the two cutting members (10), and the machine includes a feeding container (3) situated at the upstream end of the conveyor belts, a roller (5) parallel to the return cylinders (2) of the conveyor belts substantially in register with the end of the feeding container (3) for supporting the chutes engaged by hand flatwise from said container on the conveyor belts and a fixed supporting plate (6) spanning the interval between the two conveyor belts and extending beyond the central edges of said conveyor belts, upstream of the cutting members (10), and being prolongated between said cutting members (at 9), means (7) being provided for setting said plate so as to bear resiliently against the filleting chute.

## Patentansprüche

1. Verfahren zum Abtrennen der Fleischlamellen von Fischskeletten beiderseits der Wirbelsäule durch Einschnitte oberhalb und unterhalb der Wirbelsäule mittels Schneidorganen, wobei die Fleischlamellen auf wenigstens einer Seite durch die Oberfläche eines Transportelements abgestützt werden, **dadurch gekennzeichnet**, daß das genannte Transportelement sich mit einer Geschwindigkeit bewegt, die der Bewegungsgeschwindigkeit der Wirbelsäule entspricht und wobei der Weg des Transportelements wenigstens beiderseits des Angriffspunkts der Schneidorgane liegt.

2. Verfahren nach Anspruch 1, **dadurch gekennzeichnet**, daß die Fischskelette flach auf zwei Transportbändern (1a, 1b) transportiert werden, die beiderseits der Wirbelsäule und der Schneidebenen der Schneidorgane (10) liegen.

3. Verfahren nach Anspruch 2, **dadurch gekennzeichnet**, daß die Wirbelsäule durch eine Nadelkette (4) bewegt wird, die zwischen den Mittelkanten der Transportbänder umläuft, und daß das Skelett dadurch auf der Nadelkette (4) und dem mittleren Teil der Transportbänder (1) durch ein Druckorgan (6) abgestützt wird, welches elastisch anliegt und sich zwischen den Schneidorganen (10) erstreckt.

4. Maschine zur Anwendung des verfahrens gemäß einem der Ansprüche 1 bis 3, enthaltend zwei parallel verlaufende Transportbänder und Schneidorgane zur Abtrennung der Fleischlamellen, die in den Fischskeletten beiderseits der Wirbelsäule liegen, und zwar durch Schnitte, die oberhalb und unterhalb der Wirbelsäule ausgeführt werden, **dadurch gekennzeichnet**, daß die Mittelkanten der genannten Transportbänder (1a, 1b) in Nähe der beiden Schneidorgane (10) verlaufen und die Maschine eine am oberen Ende der Transportbänder angeordnete Zuführmulde (3) aufweist, weiterhin eine parallel zu den Umlenkwalzen (2) der Transportbänder angeordnete Rolle (5) im wesentlichen in Höhe des Endes der Zuführmulde (3) zur Abstützung der Skelette, die von Hand flach von der genannten Mulde auf die Transportbänder gelegt werden, sowie eine feste Auflageplatte (6) zur abdeckung des Zwischenraums zwischen den beiden Transportbändern und über die Mittelkanten der genannten Transportbänder hinausgehend, oberhalb der Schneidorgane (10) und zwischen den genannten Schneidorganen (bei 9) verlaufend, wobei Mittel (7) vorgesehen sind, um die genannte Platte elastisch an das Fischskelett anzudrücken.

EP 0 286 468 B1